# EUROPEAN PATENT APPLICATION

(11) **EP 4 119 004 A1**
(43) Date of publication of application: **18.01.2023**
(21) Application number: 22184659.5
(22) Date of filing: 13.07.2022
(51) Int. Cl.: A47B 47/03, A47B 47/05, A47B 96/06, A47B 96/14, F16B 12/32, E04F 13/08

(54) **FURNISHING ITEM AND ITS USE**

(30) Priority: 15.07.2021 EP 21185908
(71) Applicant: Navona GmbH & Co. KG, 36088 Hünfeld (DE)
(72) Inventor: MOST, Marco, 36088 Hünfeld (DE)
(74) Representative: Aera A/S

(57) **Abstract**

The present invention concerns a furnishing item, comprising a corpus (2) with at least one framing (3) which is made from a plurality of structural profiles (6) to form a frame, wherein a decorative panel (4) or a further corpus (5) can be attached to the at least one framing and can be connected to the framing and detached therefrom by means of a non-positive and/or positive connection, wherein the non-positive and/or positive connection has a first retaining element and a second retaining element of complementary design, wherein the first retaining element is connected to the rear side of the decorative panel wherein the structural profiles are provided on one or more of their sides with at least one longitudinal groove (6.1) forming the second retaining element, the first retaining element being designed as a slot nut (7), wherein the slot nut comprises two part-slot nuts (7.1, 7.2) which are separably connected to each other, wherein the one part-slot nut comprises a rotationally symmetrical head (7.1.1), such as a mushroom head which is complementarily formed so as to be introduced into the longitudinal groove (6.1), and an adjoining shaft (7.1.2) with a smaller external diameter than that of the head, wherein a threaded rod is provided, which connects to the free end of the shaft (7.1.2) of the one part-slot nut (7.1) and is such designed that it engages with a complementary threaded portion of a bore of the other part-slot nut (7.2). Further, the present invention concerns the use of the furnishing item.

## Description

The present invention concerns a furnishing item and the use of it, specifically according to the independent claims.

Furnishing items or furnishings can be furniture. Conventionally the term furniture refers to movable objects intended to support various human activities such as seating (e.g., chairs, stools, and sofas), eating (tables), and sleeping (e.g., beds). Furniture is also used to hold objects at a convenient height for work (as horizontal surfaces above the ground, such as tables and desks), or to store things (e.g., cupboards and shelves). However, furnishing items in the sense of the present invention may also be walls, e.g. built up like drywalls.

Commercially available furniture for kitchens, bathrooms or living rooms according to the prior art are made up of a cabinet corpus. They usually consist of at least two side parts, a bottom part, a top part, a back wall and doors or drawers at the front. These parts are assembled together to build up the corpus. Such furniture is normally delivered disassembled, which means an immense transport volume, difficult handling into home and a high risk of damage during transport. Kits are delivered to the customer in all their individual parts and are sometimes very complicated and time-consuming to assemble. Modular furniture systems are delivered partially assembled, but consist largely of identical parts, which often cannot be changed at will.

The disadvantage of all the above-mentioned furniture concepts is the fact that the individual parts like side, bottom, back and top parts forming the corpus have to be assembled together in order to achieve stability. Another disadvantage is the fact that after the purchase a flexible extension or reduction of the furniture is not possible or only possible with a very high effort. A third disadvantage is the fact that the relevant decorations visible on the outside are usually not interchangeable, as they are part of the static whole corpus of the furniture. A fourth disadvantage comes into play when a part has to be replaced due to damage, which is not possible or only possible at very high cost with conventional furniture, especially if the furniture is older and not produced anymore.

It is therefore the object of the invention to provide a furnishing item which is improved compared to the prior art.

The underlying object of the present invention is solved by a furnishing item and its use according to the independent claims. The dependent claims represent particularly preferred embodiments of the invention.

A furnishing item according to the present invention comprises a corpus with at least one framing which is made from a plurality of structural profiles to form a frame, wherein a decorative panel or a further corpus can be attached to the at least one framing and can be connected to the framing and detached therefrom by means of a non-positive and/or positive connection, wherein the non-positive and/or positive connection has a first retaining element and a second retaining element of complementary design, wherein the first retaining element is connected to the rear side of the decorative panel, wherein the structural profiles are provided on one or more of their sides with at least one longitudinal groove forming the second retaining element, the first retaining element being designed as a slot nut, wherein the slot nut comprises two part-slot nuts which are separably connected to each other, wherein the one part-slot nut comprises a rotationally symmetrical head, such as a mushroom head which is complementarily formed so as to be introduced into the longitudinal groove, and an adjoining shaft with a smaller external diameter than that of the head, wherein a threaded rod is provided, which connects to the free end of the shaft of the one part-slot nut and is such designed that it engages with a complementary threaded portion of a bore of the other part-slot nut.

By making the decorative panel detachable from the framing, the furnishing item has almost an unlimited lifespan. If in the course of time it will not anymore seem modern to the user due to its decors or colours or due to the location or living circumstances of the user, it can be interchanged. Due to the modular design of the furnishing item, it can be extended, reduced or completely redesigned with other materials, surfaces, colours and decors at any time. To extend a wardrobe, for example, all the user has to do is to provide another framing for the outer side, move the decorative panel to what is now the outer side, insert the desired objects such as a door or drawers and add or replace the top cover panel.

A further advantage concerns the individualisation of the furnishing item of the present invention. The corpus, defining the substructure of the furniture bears the load of the construction and the inner panelling of the furniture are always kept decoratively neutral. That means that the load bearing part of the corpus is independent of the decor part of the corpus. Thus, the outer decor can be replaced at any time, even after purchase. This offers the user the opportunity to customise his furniture and change it at any time. Top panels, doors, drawer fronts and side panels can be exchanged for other materials and decors as desired.

In the matter of sustainability, the furnishing item according to the present invention is a product that is truly sustainable since it is made to have a very long life and, thus, avoid waste. Each individual part can be replaced by dismounting the decorative panel from the framing or the corpus. Thus, also damaged parts can easily be interchanged for new ones, over and over again. If all individual parts of the furnishing item are made of extremely stable and high-quality components, the life cycle of this furniture is almost unlimited.

According to a preferred embodiment of the present invention, the threaded rod is dimensioned in its length such that the corresponding play of the head against tilting in relation to the boundary surfaces of the longitudinal groove is adjustable accordingly, preferably such that the play against tilting in the direction away from the longitudinal axis of the structural profile between the contact surfaces of the part-slot nut and the boundary surfaces of the longitudinal groove is between 0.01 and 0.1 mm, in order to prevent jamming of the part-slot nuts during displacement along the longitudinal axis of the structural profile. Such, different offsets of decorative panels, e.g. made up of tiles due to tolerances may be prevented which results in a flat surface of the decorative panels.

Preferably, the head is designed in relation to the longitudinal groove in which it is guided in such a manner that it is freely movable with play in the longitudinal groove along the longitudinal axis of the structural profile. In this way, the decorative panel can be fixed even easier to the framings.

It has been shown that the advantages of the present invention can be at best attained if the longitudinal groove of the structural profile has a T-shape or a mushroom shape when viewed in a cross-section perpendicular to the longitudinal axis of the structural profile. Then it perfectly fits the slot nuts and provides for a strong fastening on the framings. This is the case, when preferably the other part-slot nut is designed such that it is insertable in the at least one longitudinal groove of the structural profiles of the framings.

Preferably, the corpus or the decorative panel comprises a plurality of framings arranged at a distance from one another, each framing then preferably forming a side part, a top, a bottom and/or a rear wall of the furnishing item and the framings being connectable to one another by means of structural profiles and the slot nuts .

The construction profiles may be formed from light materials, e.g. aluminium. In a cross-section, these can have a rectangular shape.

For example, for connecting two structural profiles lying directly opposite each other (e.g. the longitudinal grooves lie congruently one above the other), correspondingly two part-slot nuts may be provided which are separably connectable to each other or are formed in one piece with each other. Thereby, the one part-slot nut may comprise a preferably rotationally symmetrical head, such as a mushroom head, and an adjoining shaft with a smaller external diameter than that of the head, and the head may be preferably designed in relation to the longitudinal groove in which it is guided in such a manner that it may be freely movable with play in the longitudinal groove along the longitudinal axis of the structural profile, but the play against tilting in the direction away from the longitudinal axis of the structural profile between the contact surfaces of the part-slot nut and the boundary surfaces of the longitudinal groove may be between 0.01 and 0.1 mm, in order to prevent jamming of the part-slot nut during displacement along the longitudinal axis of the structural profile. Furthermore, the part-slot nut may comprise a spring-biased ball at its head, the ball being arranged on the side of the head facing away from the shaft, so that when the head is pushed into the longitudinal groove, the ball runs on one of the boundary surfaces of the longitudinal groove of the structural profile for ease of sliding.

When the two part-slot nuts are separable from and linkable to each other by the threaded rod and the threaded portion, an easy and cost-efficient way to detachably join the construction profiles from standardised slot nuts is possible. Especially, with this embodiment, the distance between two profiles can be varied by turning the threaded rod more in or out in the threaded bore. This means that, for example, two decorative panels that are directly next to each other can be aligned exactly to each other without any offset to each other.

According to an embodiment of the present invention, the corpus of the furnishing item may comprise a plurality of framings arranged at a distance from one another, each framing then preferably forming a side part, a top, a bottom and/or a rear wall of the furnishing item and the framings being connectable to one another by means of structural profiles and slot nuts. So, many different forms of parallelepipedal corpuses can be achieved with the present invention.

According to another embodiment of the present invention, the decorative panel may at least be partially made of a stone, such as natural stone, fireclay stone or quartz composite stone, of ceramic, such as clay ceramic or glass ceramic, glass, such as mirror glass or tempered glass, a metal, such as aluminium, brass or stainless steel, a plastic, such as acrylic, wood, a high-pressure laminate (HPL), a coated MDF or chipboard, a composite material of aluminium and plastic or combinations of the aforementioned materials. This may have especially advantages on the building biology of the furnishing item. All construction parts of the corpus (structural profiles) can be made of aluminium and the connecting parts (slot nuts, part-slot nuts) can be ade of aluminium or metal, too. Aluminium has a recycling rate of over 95%. Ceramics consist of materials (glass and quartz particles) that come from nature and can also be completely recycled. Especially these substances, do not have high proportions of binding agents (bonding of pressboard) or varnishes, which could possibly release pollutants into the air we breathe through diffusion or cause problems in disposal like this is the fact in chipboards and many more.

According to another embodiment of the furnishing item according to the present invention, the decorative panel may have a thickness of 3 to 20 mm, preferably 4 to 12 mm. Such, in particular thin materials can be used as decorative panels. Thus, the amount of material and the weight of such a furnishing item can be reduced.

The present invention also concerns the use of such an inventive furnishing item as a facing wall or furniture for interior use, such as a cupboard, shelf, in particular for living rooms such as sitting rooms, kitchens or bathrooms or business premises such as offices.

Further, the present invention concerns the use of a furnishing item as a storage space for accommodating vehicles, equipment, goods and materials or as furniture for outdoor use, such as an outdoor kitchen.

The invention will now be described in more detail by means of embodiments and the figures.

Shown are:
- Fig. 1a, 1b:: a spatial view from the front and the back of a furnishing item according to an embodiment of the invention;
- Fig. 1c:: a detail of a spatial view from the back of a part of the furnishing item according to Fig. 1a and 1b;
- Fig. 2:: a front and side view on a the decorative panel from Fig. 1a to 1c;
- Fig. 3a:: a spatial view towards a furnishing item being assembled according to another embodiment of the invention;
- Fig. 3b:: a spatial view on the readily assembled furnishing item from Fig. 4a;
- Fig. 4a, 4b:: a spatial view and side view of a part-nut slot used according to the present invention;
- Fig. 5:: a spatial view of a structural profile.

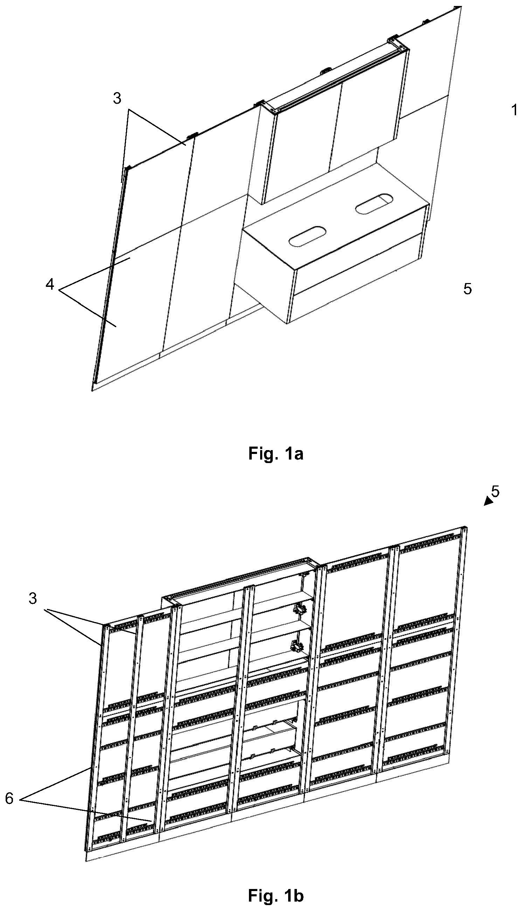

Figs. 1a to 1c each show a spatial view of a possible embodiment of the inventive furnishing item. In the illustration according to Fig. 1a, the furnishing item 1 is a combination of a wall and individual furniture elements, in this case a bathroom cabinet with a wash basin and a mirror cabinet. From the backside, as can best be seen from Fig. 1b, one can see that the furnishing item comprises a corpus 2 which is made of a plurality of framings 3. Each framing 3 thereby forms a rectangular frame. To the framing 3 a decorative panel 4 can be mounted. It can be seen from Fig. 1b that the decorative panels 4 that form the part of the wall of the furnishing item which surrounds the bathroom cabinet and the mirror cabinet are suspended upon the framing 3 by a non-positive and/or positive connection.

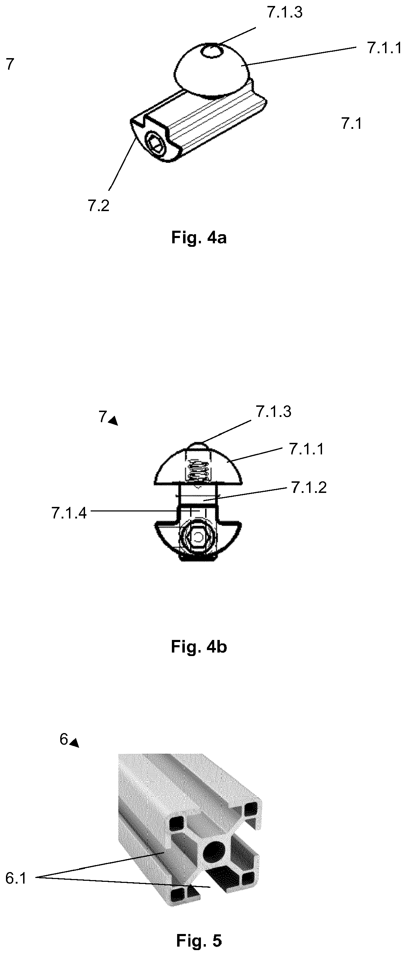

The framings 3 can be made of conventional structural profiles 6, of which one is shown in Fig. 5.

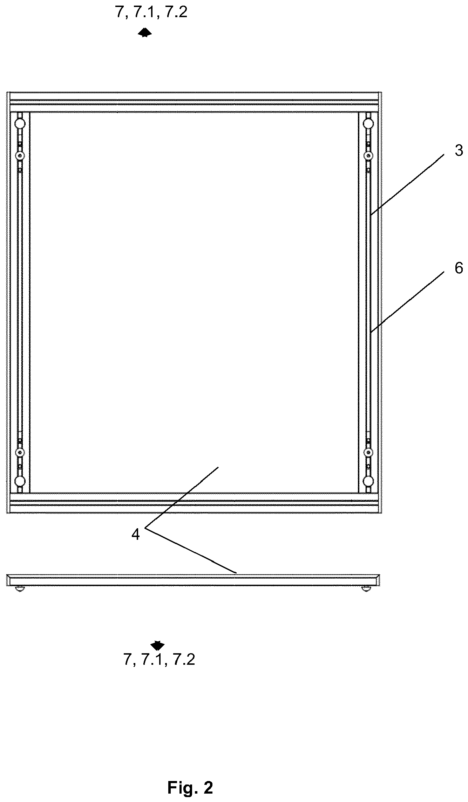

The non-positive and/or positive connection can best be seen from Fig. 2. Thereby, e.g. a first retaining element, here in the form of a slot nut 7 is arranged on the rear side of the decorative panel 4 and the second retaining element, here in the form of the structural profiles 6 is arranged on the framing 3 or is made in one piece with the framing 3. The framing 3 is closed in a rectangle. Both retaining elements, here the slot nuts 7 and the structural profiles 6 can engage with each other such that here the decorative panel 4 can be suspended removably on the framing 3 of the furnishing item 1 (see Fig. 1a). To insert the decorative panel 4 on to the framing 3 of the furnishing item 1, it is hooked into the framing 3 of the furnishing item 1 from above and it holds due to its weight force, thereby the slot nuts 7 interlocking with the longitudinal grooves 6.1 (see Fig. 5) in the structural profiles 6 of the framings 3 of the furnishing item 1. To remove the decorative panel 4 from the framing 3 of the furnishing item 1, it is taken off at the top.

As can be seen, the non-positive and/or positive connection is designed such that the decorative panel 4 can be connected to the framing 3 of the furnishing item 1 and detached therefrom without using a tool.

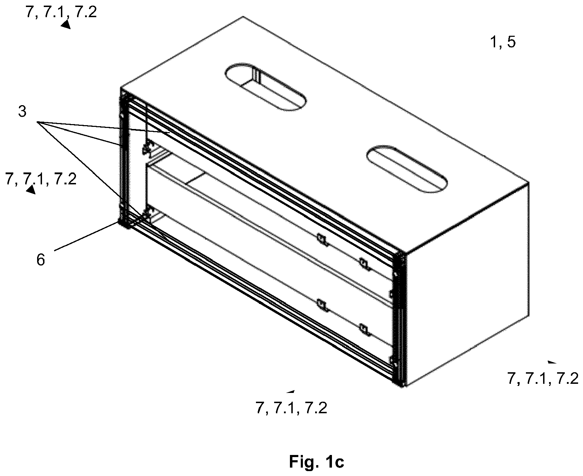

The same is true for the corpus 5 of e.g. a bathroom cabinet as shown in Fig. 1c. Here, the whole corpus 5 can also be detached from the framing 3 of the furnishing item 1 as shown in Fig. 1a or 1b. In this case, the corpus 5 has a closed rectangle framing on its own, with which slot nuts 7 it can be hung up on the framing 3 of the furnishing item 1 as disclosed in Fig. 1b.

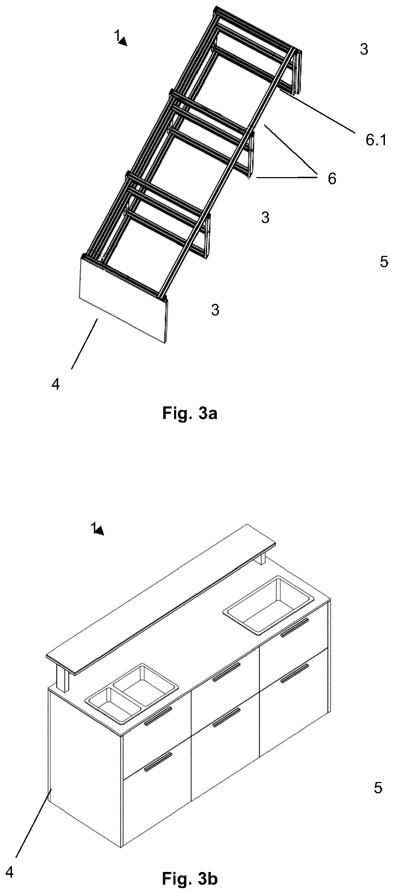

Fig. 3a and 3b show a spatial view of a furnishing item 1 being assembled according to another embodiment of the invention. It can be seen, that the corpus 5 comprises a plurality of framings 3 which are arranged at a distance from one another. Each framing 3 can preferably form a side part, a top, a bottom and/or a rear wall of the furnishing item 1. All of the framings 3 are made of structural profiles 6. These structural profiles 6 are provided on one or more of their sides with at least one longitudinal groove 6.1 (see Fig. 5), into which a complementarily formed slot nut 7 (see Fig. 4a and 4b) can be introduced. By this way, individual framings 3 can be detachably joined together by the use of further structural profiles 6 and slot nuts 7 to form the furnishing item 1 according to Fig. 1a or 1b. Also, these each framings 3 may be designed as closed rectangles.

Fig. 4a shows a spatial view and Fig. 4b a side view of a respective slot nut 7 which is separated in two part-slot nuts 7.1, 7.2. It can be seen, that the both part-slots nut 7.1, 7.2 comprise a T-shape or a mushroom shape in cross-section to the longitudinal axis of the structural profile 6 and that shape is complementary to the profile of the longitudinal groove of the structural profile 6.

Normally, the slot nuts 7 may comprises at least one threaded bore and into which a corresponding screw can be introduced in order to releasably clamp the slot nut 7 within the longitudinal groove 6.1 against the boundary surfaces thereof.

The part-slot nut 7.1 comprises a rotationally symmetrical head 7.1.1, such as a mushroom head, and an adjoining shaft 7.1.2 with a smaller external diameter than that of the head 7.1.1. Thereby, the head 7.1.1 is designed such in relation to the longitudinal groove 6.1 of the structural profile 6, in which it is guided, that it is freely movable with play in the longitudinal groove 6.1 along the longitudinal axis of the structural profile 6. However, the play is chosen such that a tilting in the direction away from the longitudinal axis of the structural profile 6 between the contact surfaces of the part-slot nut 7.1, 7.2 and the boundary surfaces of the longitudinal groove 6.1 is between 0.01 and 0.1 mm. By this measure, a jamming of the part-slot nut 7.1, 7.2 during displacement along the longitudinal axis of the structural profile 6 is prevented. Thus, the slot nut 7, especially the part-slot nut 7.1, 7.2 can easily be positioned on the desired position along the longitudinal groove 6.1.

However, the play against tilting can also be easily adjusted, respectively, by the use of, a threaded rod 7.1.4. It connects to the the shaft 7.1.2 and is arranged on the free end of the one part-slot nut 7. The threaded rod 7.1.4 can be dimensioned in its length such that the corresponding play of the head 7.1.1 against tilting in relation to the boundary surfaces of the longitudinal groove 6.1 is adjusted accordingly.

In this way, with the part-slot nuts 7.1, 7.2, two structural profiles 6 lying directly opposite each other, e.g. the longitudinal grooves 6.1 lying congruently one above the other, can be connected to each other. Thereby, the two part-slot nuts 7.1, 7.2 can be designed such that they are separably connected to each other or are formed in one piece with each other.

For reducing friction while moving the slot nut 7 within the longitudinal groove 6.1 of the structural profile 6, the part-slot nut 7.1 may have a spring-biased ball 7.1.3 at its head 7.1.1, the ball 7.1.3 being arranged on the side of the head facing away from the shaft 7.1.2, so that when the head 7.1.1 is pushed into the longitudinal groove, the ball 7.1.3 runs on the structural profile 6, in detail on one of the (inner) boundary surfaces of the longitudinal groove 6.1 for ease of sliding.

Having a view on Fig. 1c, there are also provided such part-slot nuts 7.1, 7.2 at each framing 3. With these part-slot nuts 7.1, 7.2, the bathroom cabinet may be easily attached to the wall shown in Fig. 1a and 1b.

With regard to Fig. 3a, the multiple framings 3, which are in this case parallel to each other, are also formed by a plurality of structural profiles 6 by connecting them with slot nuts 7. This construction forms the corpus 5 of the furnishing item 1, in this case being an outdoor kitchen. The outdoor kitchen may have shelves and a sink, see Fig. 3b. At least the both sides of the outdoor kitchen as well as the rear side thereof may be provided with slot nuts 7, 7.1, 7.2 as disclosed in the foregoing Figs.

According to the present invention, the furnishing item is a modular system of furniture with high flexibility in arrangement and sustainability. In all the above-mentioned areas, it is possible to create wall, floor and furniture surfaces from the same materials and thus optimally match them to each other, all from a single source, all with one and the same decor, if required.

The use of structural profiles 6 as internal struts enables the attachment of drawer runners, door hinges and shelf supports. If used in walls, additionally to the decorative effect, the use of a framing 3 also has the advantage of a "ventilated" facade. At the same time, installations can be integrated behind that wall. Shelving boards can also be changed if desired since they are only hooked into the wall without tools.

### Reference signs

- 1: furnishing item
- 2: corpus
- 3: framing
- 4: decorative panel
- 5: corpus
- 6: structural profiles
- 6.1: longitudinal groove
- 7: slot nuts
- 7.1: part-slot nut
- 7.2: part-slot nut
- 7.1.1: head
- 7.1.2: shaft
- 7.1.3: ball
- 7.1.4: threaded rod

## Claims

1. Furnishing item (1), comprising a corpus (2) with at least one framing (3) which is made from a plurality of structural profiles (6) to form a frame, wherein a decorative panel (4) or a further corpus (5) can be attached to the at least one framing (3) and can be connected to the framing (3) and detached therefrom by means of a non-positive and/or positive connection, wherein the non-positive and/or positive connection has a first retaining element and a second retaining element of complementary design, wherein the first retaining element is connected to the rear side of the decorative panel (4) wherein the structural profiles (6) are provided on one or more of their sides with at least one longitudinal groove (6.1) forming the second retaining element, the first retaining element being designed as a slot nut (7), wherein the slot nut (7) comprises two part-slot nuts (7.1, 7.2) which are separably connected to each other, wherein the one part-slot nut (7.1) comprises a rotationally symmetrical head (7.1.1), such as a mushroom head which is complementarily formed so as to be introduced into the longitudinal groove (6.1), and an adjoining shaft (7.1.2) with a smaller external diameter than that of the head (7.1.1), wherein a threaded rod is provided, which connects to the free end of the shaft (7.1.2) of the one part-slot nut (7.1) and is such designed that it engages with a complementary threaded portion of a bore of the other part-slot nut (7.2).

2. Furnishing item (1) according to claim 1, **characterised in that** the threaded rod is dimensioned in its length such that the corresponding play of the head (7.1.1) against tilting in relation to the boundary surfaces of the longitudinal groove (6.1) is adjustable accordingly, preferably such that the play against tilting in the direction away from the longitudinal axis of the structural profile (6) between the contact surfaces of the part-slot nut (7) and the boundary surfaces of the longitudinal groove (6.1) is between 0.01 and 0.1 mm, in order to prevent jamming of the part-slot nuts (7.1, 7.2) during displacement along the longitudinal axis of the structural profile (6).

3. Furnishing item (1) according to claim 1 or 2, **characterised in that** the head is designed in relation to the longitudinal groove (6.1) in which it is guided in such a manner that it is freely movable with play in the longitudinal groove (6.1) along the longitudinal axis of the structural profile (6).

4. Furnishing item (1) according to any one of claims 1 to 3, **characterised in that** the one part-slot nut (7.1) has a spring-biased ball (7.1.3) at its head, the ball (7.1.3) being arranged on the side of the head (7.1.1) facing away from the shaft (7.1.2), so that when the head (7.1.1) is pushed into the longitudinal groove (6.1), the ball (7.1.3) runs on one of the boundary surfaces of the longitudinal groove (6.1) for ease of sliding.

5. Furnishing item (1) according to any one of claims 1 to 4, **characterised in that** the longitudinal groove (6.1) of the structural profile has a T-shape or a mushroom shape when viewed in a cross-section perpendicular to the longitudinal axis of the structural profile (6).

6. Furnishing item (1) according to one of the preceding claims, **characterised in that** the corpus (2) or the decorative panel (4) comprises a plurality of framings (3) arranged at a distance from one another, each framing (3) then preferably forming a side part, a top, a bottom and/or a rear wall of the furnishing item (1) and the framings (3) being connectable to one another by means of structural profiles (6) profiles and the slot nuts (7).

7. Furnishing item (1) according to one of the preceding claims, **characterised in that** the other part-slot nut (7.2) is designed such that it is insertable in the at least one longitudinal groove (6.1) of the structural profiles (6) of the framings (3).

8. Furnishing item (1) according to one of the preceding claims, **characterised in that** the decorative panel (4) is at least partially made of a stone, such as natural stone, fireclay stone or quartz composite stone, of ceramic, such as clay ceramic or glass ceramic, glass, such as mirror glass or tempered glass, a metal, such as aluminium, brass or stainless steel, a plastic, such as acrylic, wood, a high-pressure laminate (HPL), a coated MDF or chipboard, a composite material of aluminium and plastic or combinations of the aforementioned materials.

9. Furnishing item (1) according to claim 8, **characterised in that** the decorative panel (4) has a thickness of 3 to 20 mm, preferably 4 to 12 mm.

10. Use of a furnishing item (1) according to any one of claims 1 to 9 as a facing wall or furniture for interior use, such as a cupboard, shelf, in particular for living rooms such as sitting rooms, kitchens or bathrooms or business premises such as offices.

11. Use of a furnishing item (1) according to any one of claims 1 to 9 as a storage space for accommodating vehicles, equipment, goods and materials or as furniture for outdoor use, such as an outdoor kitchen.
